# EUROPEAN PATENT APPLICATION

(11) **EP 4 604 225 A1**
(43) Date of publication of application: **20.08.2025**
(21) Application number: 23893674.4
(22) Date of filing: 13.11.2023
(51) Int. Cl.: H01M 10/04, H01M 10/0587

(54) **WINDING DEVICE**

(30) Priority: 22.11.2022 CN 202223106651 U
(71) Applicant: Wuxi Lead Intelligent Equipment Co., Ltd., Wuxi, Jiangsu 214028 (CN)
(72) Inventor: WANG, Fengjie, Wuxi, Jiangsu 214028 (CN)
(74) Representative: Rau, Schneck & Hübner Patentanwälte Rechtsanwälte PartGmbB
(86) International application number: PCT/CN2023/131327
(87) International publication number: WO 2024/109584

(57) **Abstract**

Disclosed is a winding device in the present disclosure. The winding device includes a material-placing mechanism, a mounting table, a winding member and a restraining member, wherein the material-placing mechanism is configured to convey a material strip; the winding member includes a winding needle base and a plurality of winding needles provided on the winding needle base, the winding needle base is rotatably provided on the mounting table, with a winding needle gap formed between the plurality of winding needles and configured to allow the material strip to pass through; the restraining member is provided outside the winding needle gap and configured to fix the material strip protruding from the winding needle gap with a preset force F1, a winding tension applied to the material strip when the winding needle base drives the winding needle to rotate is F2, and F1 is less than F2 so as to wind both a preset length of the material strip and the material strip protruding from the winding needle gap onto the winding needle when the winding needle base drives the winding needle to rotate. The winding device provided by the present disclosure can ensure the winding performance for small-sized cells.

## Description

### CROSS-REFERENCE TO RELATED APPLICATIONS

The present disclosure claims priority to a Chinese patent application No. 202223106651.8 filed with the CNIPA on November 22, 2022 and entitled "WINDING DEVICE", which is hereby incorporated by reference in its entirety.

### TECHNICAL FIELD

The present disclosure relates to the technical field of cell processing equipment, and particularly to a winding device.

### BACKGROUND

With the development of battery technology, there is an increasing demand for battery miniaturization. As the core component of a battery, a cell must also be miniaturized. Consequently, the demand for high processing quality for miniaturized cells has also been continuously rising.

In the relevant technology, a clamping member, such as an inner clamping needle, is provided on a winding needle. This inner clamping needle can clamp and fix the initial winding end of the material strip onto the winding needle before the material strip is wound onto the winding needle, thereby preventing the material strip from sliding relative to the winding needle. In the case that the material strip can be prevented from sliding relative to the winding needle by the inner clamping needle, the material strip can be wound neatly onto the winding needle when the winding needle base starts to drive the winding needle to rotate so as to wind the material strip onto the winding needle.

However, when winding a small-sized cell, the winding needle that is adapted to the small cell must also be small. Due to size constraints, it is not feasible to provide a clamping member on the winding needle to fix the initial winding end of the material strip. Consequently, when the winding needle base starts to drive the winding needle to rotate, the material strip may slip relative to the winding needle. This causes the subsequent winding to be disordered and uneven, resulting in suboptimal winding performance.

### SUMMARY

In view of the above deficiencies in the prior art, the present disclosure provides a winding device, which can ensure the winding performance for small-sized cells.

In order to solve the above technical problem, the present disclosure provides a winding device, which includes:
a material-placing mechanism configured to convey a material strip;
a mounting table;
a winding member including a winding needle base and a plurality of winding needles provided on the winding needle base, the winding needle base being rotatably provided on the mounting table, with a winding needle gap formed between the plurality of winding needles and configured to allow the material strip to pass through; and
a restraining member provided outside the winding needle gap and configured to fix the material strip protruding from the winding needle gap with a preset force F1, where a winding tension applied to the material strip when the winding needle base drives the winding needle to rotate is F2, and F1 is less than F2, so as to wind both a preset length of the material strip and the material strip protruding from the winding needle gap onto the winding needle when the winding needle base drives the winding needle to rotate.

Optionally, the restraining member is movable towards or away from the winding needle so as to fix the material strip protruding from the winding needle gap with the preset force or release it.

Optionally, the restraining member includes a first driving member and an adsorption member connected to the first driving member, the first driving member is configured to drive the adsorption member to move towards or away from the winding needle, and the adsorption member is configured to adsorb and fix the material strip protruding from the winding needle gap.

Optionally, the adsorption member is an adsorption plate, which is provided with a plurality of first adsorption holes on a side of the adsorption plate facing the material strip.

Optionally, the restraining member includes a second driving member and a pressure roller rotatably connected to the second driving member, the second driving member is configured to drive the pressure roller to move towards or away from the winding needle, and the pressure roller is configured to press the material strip protruding from the winding needle gap onto the winding needle so as to fix the material strip by pressing.

Optionally, the restraining member further includes a mounting base connected to the second driving member, and an elastic member provided on the mounting base, with the pressure roller provided on the elastic member.

Optionally, the mounting table includes a rotating plate, which is rotatable about its central axis;
the winding member includes a first winding member and a second winding member;
the winding device has a winding station and a material-unloading station, when the first winding member winds a preset length of the material strip at the winding station, the rotating plate is configured to drive the first winding member to rotate to the material-unloading station and to drive the second winding member to rotate to the winding station, and the winding needle base of the second winding member is further configured to drive the winding needle to slide and protrude out relative to the rotating plate along the axial direction of the winding needle, so as to enable the material strip to be located in the winding needle gap of the second winding member;
the winding device further includes a cutter assembly, which is configured to cut off a material strip between the first winding member and the second winding member, and the restraining member is configured to fix the material strip which protrudes from the winding needle gap and has been cut off.

Optionally, the cutter assembly includes a cutter driving member and a cutter connected to the cutter driving member, and the cutter driving member is configured to drive the cutter to move towards the material strip so as to cut off the material strip between the first winding member and the second winding member.

Optionally, the cutter is provided with a heating rod therein, which is configured to heat the cutter.

Optionally, the mounting table further includes a connection shaft and an abutting member provided on the connection shaft, the abutting member is configured to provide an abutting force to the material strip when the cutter cuts off the material strip between the first winding member and the second winding member, and the rotating plate is fixed to the connection shaft.

Optionally, the abutting member is provided with an avoidance groove, which is configured to avoid the cutter.

Optionally, the abutting member, on a side facing the material strip, is provided with a first adsorption plate and a second adsorption plate, there is an avoidance gap between the first adsorption plate and the second adsorption plate, the avoidance gap forms the avoidance groove, and the first adsorption plate and the second adsorption plate are configured to adsorb the material strip.

Optionally, the winding device further includes a finishing assembly, and the finishing assembly includes a finish compressing member provided adjacent to the material-unloading station, and is configured to press the material strip, which is adjacent to the material-unloading station and has been cut off, onto the winding member at the material-unloading station.

Optionally, the finishing assembly further includes a finishing adsorption member provided adjacent to the material-unloading station, and the finishing adsorption member is configured to adsorb the material strip, which is adjacent to the material-unloading station and has been cut off, so as to prevent a free end of the material strip from swinging.

Compared with the prior art, the present disclosure at least achieves the following beneficial effects:
In the present disclosure, since the restraining member fixes the material strip protruding from the winding needle gap with a preset force, and the preset force is less than the winding tension applied to the material strip when the winding needle base drives the winding needle to rotate, when the winding needle base drives the winding needle to rotate relative to the mounting table, it is possible to prevent the material strip protruding from the winding needle gap from sliding relative to the winding needle, and at the same time to ensure that the material strip protruding from the winding needle gap is wound onto the winding needle, thereby ensuring the neatness of the material strip wound onto the winding needle and improving the winding performance of the material strip. Additionally, since the restraining member is provided outside the winding needle gap, the winding device can be adapted for winding a small-sized cell.

### BRIEF DESCRIPTION OF THE DRAWINGS

To better illustrate technical solutions of embodiments of the present disclosure, the accompanying drawings required for the embodiments will be briefly introduced as follows. Note that the drawings described here are only some embodiments of the present disclosure. For those skilled in the art, additional drawings can be derived based on these disclosed drawings without creative efforts.
FIG. 1 is a structural schematic diagram of a winding device provided by an embodiment of the present disclosure;
FIG. 2 is a structural schematic diagram of a winding member provided by an embodiment of the present disclosure;
FIG. 3 is a structural schematic diagram of a restraining member being an adsorption member provided by an embodiment of the present disclosure;
FIG. 4 is a structural schematic diagram of an adsorption plate provided by an embodiment of the present disclosure;
FIG. 5 is a structural schematic diagram when a restraining member provided by an embodiment of the present disclosure is a pressure roller and a material strip is not pressed by the pressure roller;
FIG. 6 is a structural schematic diagram when a restraining member provided by an embodiment of the present disclosure is a pressure roller and a material strip is pressed by the pressure roller;
FIG. 7 is a structural schematic diagram of a connection of a pressure roller provided by an embodiment of the present disclosure;
FIG. 8 is a structural schematic diagram of configurations of a first winding member and a second winding member provided by an embodiment of the present disclosure;
FIG. 9 is a structural schematic diagram of a cutter assembly provided by an embodiment of the present disclosure;
FIG. 10 is a structural schematic diagram of a configuration of an abutting member provided by an embodiment of the present disclosure;
FIG. 11 is a front view of the abutting member provided by an embodiment of the present disclosure;
FIG. 12 is a structural schematic diagram of a finishing assembly provided on the winding device provided by an embodiment of the present disclosure;
FIG. 13 is a schematic diagram of the finishing assembly provided by an embodiment of the present disclosure.

### Description of reference signs:

10-material strip;
100-winding device; 110-material-placing mechanism;
120-mounting table; 121-rotating plate; 122-abutting member; 1221-avoidance groove; 1222-first adsorption plate; 1223-second adsorption plate; 1224-second adsorption hole; 123-connection shaft;
130-winding member; 131-winding needle base; 132-winding needle; 133-winding needle gap; 134-first winding member; 135-second winding member;
140-restraining member; 141-adsorption member; 1411-first driving member; 1412-first adsorption hole; 142-pressure roller; 1421-second driving member; 1422-mounting base; 1423-elastic member;
151-winding station; 152-material-unloading station;
160-cutter assembly; 161-cutter driving member; 162-cutter; 163-heating rod;
170-finishing assembly; 171-finish compressing member; 1711-bracket; 1712-pressure driving member; 1713-pressing wheel; 172-finishing adsorption member ; 1721-adsorption driving member; 1722-finishing adsorption plate.

### DETAILED DESCRIPTION

The following description will clearly and completely describe the technical solutions in the embodiments of the present disclosure with reference to the accompanying drawings of the embodiments of the present disclosure. Obviously, the described embodiments are only part of the embodiments of the present disclosure, not all of them. Based on the embodiments in the present disclosure, all other embodiments obtained by those skilled in the art without creative labor fall within the scope of protection of the present disclosure.

In the present disclosure, an orientation or positional relationship indicated by terms "up", "down", "left", "right", "front", "back", "top", "bottom", "inner", "outer", "vertical", "horizontal", "transverse", "longitudinal", etc., is based on the orientation or positional relationship shown in the accompanying drawings. These terms are mainly intended to better describe the present disclosure and its embodiments, rather than to limit that the indicated devices, components, or parts must have specific orientations or be constructed and operated in specific orientations.

Moreover, some of these terms may also be used to indicate other meanings besides indicating orientation or positional relationships. For example, the term "up" may also indicate a certain attachment relationship or connection relationship in certain cases. Those skilled in the art may understand the specific meanings of these terms in the present disclosure according to specific situations.

In addition, terms "installed", "disposed", "provided with", "connected", and "communicated" should be interpreted in a broad sense. For example, it can be a fixed connection, a detachable connection, or an integrated construction; it can be a mechanical connection or an electrical connection; it can be directly connected, or indirectly connected through an intermediate medium, and it can be an internal communication between two devices, elements or parts. For those of ordinary skill in the art, specific meanings of the above terms in the present disclosure can be understood according to specific situations.

In addition, terms such as "first", "second", etc., are mainly used to distinguish different devices, elements, or parts (which may be the same or different in specific types and structures), and do not imply or suggest relative importance and quantity of the indicated devices, elements, or parts. Unless otherwise stated, the term "plurality" means two or more.

As described in the background of the present disclosure, in the relevant technology, a clamping member, such as an inner clamping needle, is provided on a winding needle. This inner clamping needle can clamp and fix the initial winding end of the material strip onto the winding needle before the material strip is wound onto the winding needle, thereby preventing the material strip from sliding relative to the winding needle. In the case that the material strip can be prevented from sliding relative to the winding needle by the inner clamping needle, the material strip can be wound neatly onto the winding needle when the winding needle base starts to drive the winding needle to rotate so as to wind the material strip onto the winding needle.

However, when winding a small-sized cell, the winding needle that is adapted to the small cell must also be small. Due to size constraints, it is not feasible to provide a clamping member on the winding needle to fix the initial winding end of the material strip. Consequently, when the winding needle base starts to drive the winding needle to rotate, the material strip may slip relative to the winding needle. This causes the subsequent winding to be disordered and uneven, resulting in suboptimal winding performance.

In order to solve the technical problems mentioned in the background, the present disclosure provides a winding device provided with a restraining member provided outside the winding needle gap. The restraining member can fix the material strip protruding from the winding needle gap with a preset force, and the preset force is less than the winding tension applied to the material strip when the winding needle base drives the winding needle to rotate. When the winding needle base drives the winding needle to rotate relative to the mounting table, it is possible to prevent the material strip protruding from the winding needle gap from sliding relative to the winding needle, and at the same time to ensure that the material strip protruding from the winding needle gap is wound onto the winding needle, thereby improving the winding performance of the material strip. Additionally, since the restraining member is provided outside the winding needle gap, the winding device can be adapted for winding a miniatured cell.

The present disclosure is described in detail below by way of specific embodiments:

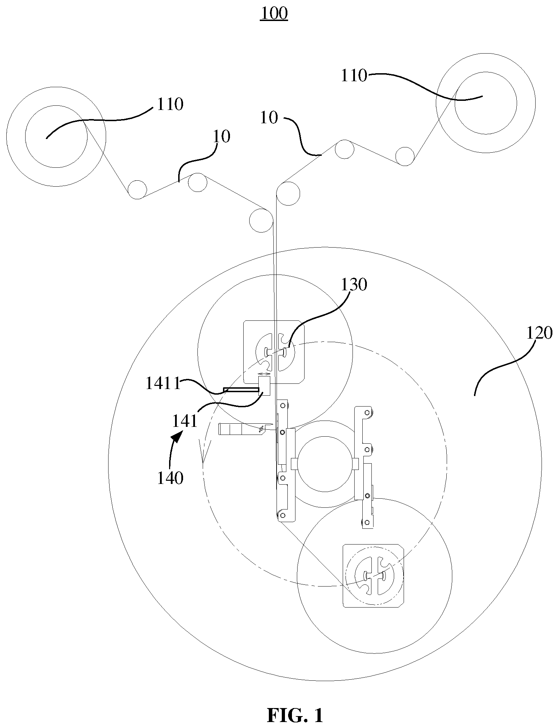

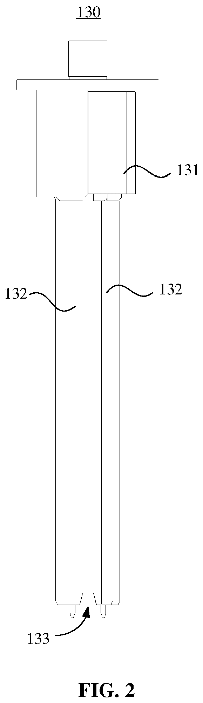

Referring to FIGS. 1 and 2, the present disclosure provides a winding device 100. The winding device 100 includes a material-placing mechanism 110, a mounting table 120, a winding member 130, and a restraining member 140, and the material-placing mechanism 110 is configured to convey a material strip 10; the winding member 130 includes a winding needle base 131 and a plurality of winding needles 132 provided on the winding needle base 131, the winding needle base 131 is rotatably provided on the mounting table 120, with a winding needle gap 133 formed between the plurality of winding needles 132 and configured to allow the material strip 10 to pass through; the restraining member 140 is provided outside the winding needle gap 133 and configured to fix the material strip 10 protruding from the winding needle gap 133 with a preset force F1, a winding tension applied to the material strip 10 when the winding needle base 131 drives the winding needle 132 to rotate is F2, and F1 is less than F2 so as to wind both a preset length of the material strip 10 and the material strip 10 protruding from the winding needle gap 133 onto the winding needle 132 when the winding needle base 131 drives the winding needle 132 to rotate.

In the present embodiment, since the restraining member 140 can fix the material strip 10 protruding from the winding needle gap 133 with a preset force, and the preset force is less than the winding tension applied to the material strip 10 when the winding needle base 131 drives the winding needle 132 to rotate, when the winding needle base 131 drives the winding needle 132 to rotate relative to the mounting table 120, it is possible to prevent the material strip 10 protruding from the winding needle gap 133 from sliding relative to the winding needle 132, and at the same time to ensure that the material strip 10 protruding from the winding needle gap 133 is wound onto the winding needle 132, thereby ensuring the neatness of the material strip 10 wound onto the winding needle 132 and improving the winding performance of the material strip 10. Additionally, since the restraining member 140 is provided outside the winding needle gap 133, the winding device 100 can be adapted for winding a small-sized cell.

In practical applications, the restraining member 140 first fixes the material strip 10 protruding from the winding needle gap 133 with a preset force, and then the winding needle base 131 drives the winding needle 132 to rotate relative to the mounting table 120, thereby winding both the preset length of the material strip 10 conveyed by the material-placing mechanism 110 and the material strip 10 protruding from the winding needle gap 133 onto the winding needle 132 to complete the initial winding of the cell.

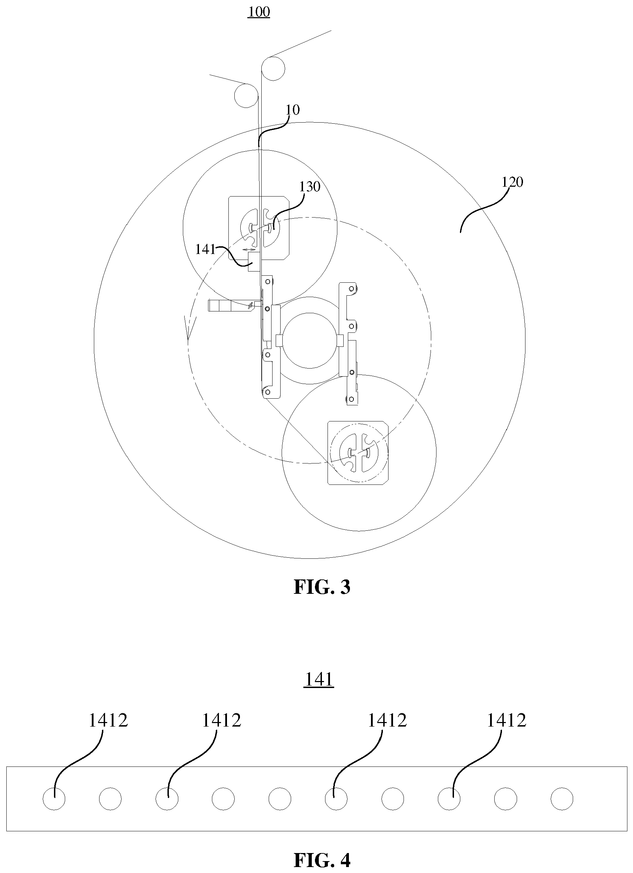

In some possible embodiments, as shown in FIGS. 1 and 3, the restraining member 140 can move towards or away from the winding needle 132 so as to fix the material strip 10 protruding from the winding needle gap 133 with a preset force or release it.

Specifically, when the restraining member 140 is moved in a direction close to the winding needle 132, it can fix the material strip 10 protruding from the winding needle gap 133 with the preset force. When the restraining member 140 is moved in a direction away from the winding needle 132, it releases the material strip 10 to avoid interference with the winding of the winding needle 132.

Thus, by allowing the restraining member 140 to move towards or away from the winding needle 132 to fix the material strip 10 protruding from the winding needle gap 133 with a preset force, it is possible to dispose the restraining member 140 flexibly, and to prevent the restraining member 140 from interference with the winding of the material strip 10 in the winding process of the winding needle 132.

The structure of the restraining member 140 can take various forms. Herein, in some possible structures, referring to FIGS. 1 and 3, the restraining member 140 includes a first driving member 1411 and an adsorption member 141 connected to the first driving member 1411. The first driving member 1411 is configured to drive the adsorption member 141 to move towards or away from the winding needle 132, and the adsorption member 141 is configured to adsorb and fix the material strip 10 protruding from the winding needle gap 133.

Thus, by adsorbing and fixing the material strip 10 protruding from the winding needle gap 133 through the adsorption member 141, both the material strip 10 conveyed by the material-placing mechanism 110 and the material strip 10 protruding from the winding needle gap 133 can be wound onto the winding needle 132 when the winding needle base 131 drives the winding needle 132 to rotate relative to the mounting table 120. Additionally, by using the adsorption member 141 to fix the material strip 10 protruding from the winding needle gap 133, compared to a winding solution that uses a clamping member fixes the material strip 10 wound onto the winding needle 132, it is possible to avoid damage to the surface of the material strip 10 and further ensure the winding performance of the cell.

To enable the adsorption plate to adsorb and fix the material strip 10, in some possible embodiments, referring to FIG. 4, the adsorption member 141 is an adsorption plate, which is provided with a plurality of first adsorption holes 1412 on a side of the adsorption plate facing the material strip 10.

Thus, by providing the plurality of first adsorption holes 1412 on the side of the adsorption plate facing the material strip 10, it is possible to ensure the effect of adsorbing and fixing the material strip 10 by the adsorption plate.

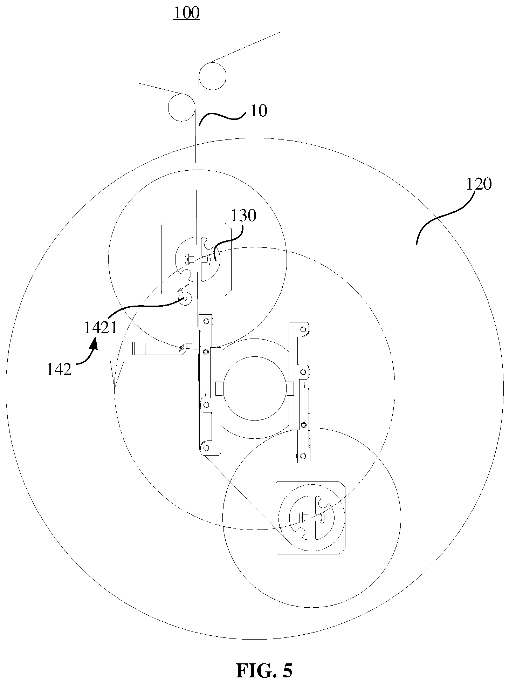

In another possible structure of the restraining member 140, referring to FIGS. 5, 6 and 7, the restraining member 140 includes a second driving member 1421 and a pressure roller 142 rotatably connected to the second driving member 1421. The second driving member 1421 is configured to drive the pressure roller 142 to move towards or away from the winding needle 132, and the pressure roller 142 is configured to press the material strip 10 protruding from the winding needle gap 133 onto the winding needle 132 to fix the material strip 10 by pressing.

Thus, by pressing the material strip 10 protruding from the winding needle gap 133 onto the winding needle 132, it is possible to prevent the material strip 10 from sliding relative to the winding needle 132 during the winding needle base 131 driving the winding needle 132 to rotate relative to the mounting table 120, such that both the material strip 10 conveyed by the material-placing mechanism 110 and the material strip 10 protruding from the winding needle gap 133 are wound onto the winding needle 132 during the winding needle base 131 driving the winding needle 132 to rotate relative to the mounting table 120. Additionally, by fixing the material strip 10 protruding from the winding needle gap 133 by pressing, in a way that uses the pressure roller 142 fixes the material strip 10 onto the winding needle 132 by pressing, compared to a winding solution that uses a clamping member fixes the material strip 10 wound onto the winding needle 132, it is possible to avoid damage to the surface of the material strip 10 and further ensure the winding performance of the cell.

It should also be noted that both the first driving member 1411 and the second driving member 1421 can be linear motors or pneumatic cylinders.

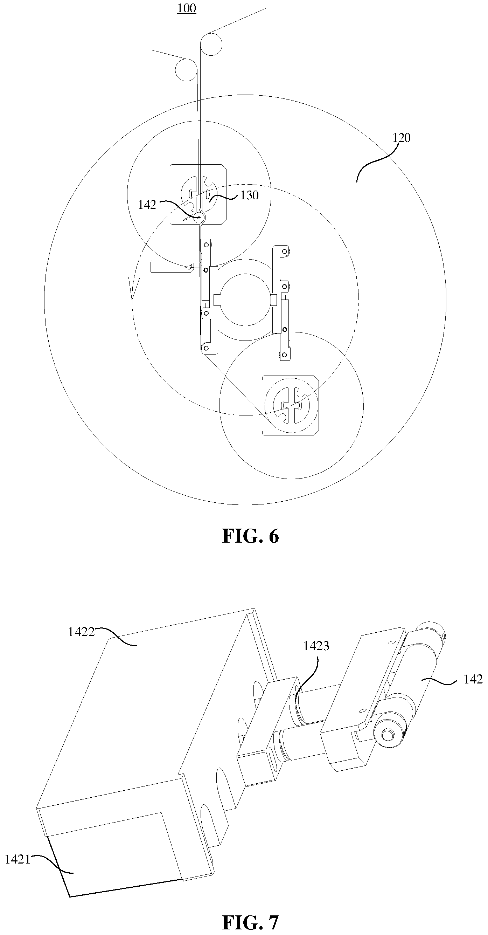

Since the pressure roller 142 is rigid, to avoid excessive pressing of the material strip 10 by the pressure roller 142, in some possible embodiments, referring to FIG. 7, the restraining member 140 also includes a mounting base 1422 connected to the second driving member 1421 and an elastic member 1423 provided on the mounting base 1422, with the pressure roller 142 provided on the elastic member 1423.

Since the pressure roller 142 is provided on the mounting base 1422 via the elastic member 1423, when the pressure roller 142 presses the material strip 10 onto the winding needle 132, the elastic member 1423 can buffer the pressing force between a part of the pressure roller 142 and the winding needle 132, thereby preventing excessive pressing of the material strip 10 by the pressure roller 142.

Herein, the elastic member 1423 can be a spring, a rubber block, or similar structures.

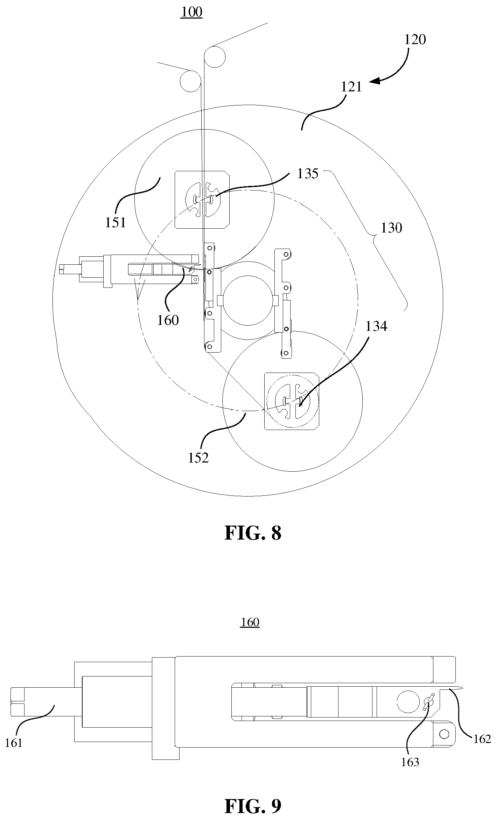

In some possible embodiments, referring to FIG. 8, the mounting table 120 includes a rotating plate 121, which is rotatable about its central axis; the winding member 130 includes a first winding member 134 and a second winding member 135. The winding device 100 has a winding station 151 and a material-unloading station 152. When the first winding member 134 winds a preset length of the material strip 10 at the winding station 151, the rotating plate 121 is configured to drive the first winding member 134 to rotate to the material-unloading station 152, and to drive the second winding member 135 to rotate to the winding station 151. The winding needle base 131 of the second winding member 135 is also configured to drive the winding needle 132 to slide and protrude out relative to the rotating plate 121 along the axial direction of the winding needle 132, so as to enable the material strip 10 to be located in the winding needle gap 133 of the second winding member 135. The winding device 100 also includes a cutter assembly 160, which is configured to cut off the material strip 10 between the first winding member 134 and the second winding member 135, and the restraining member 140 is configured to fix the material strip 10 which protrudes from the winding needle gap 133 and has been cut off.

In practical applications, the first winding member 134 is first made to be positioned at the winding station 151, and then the restraining member 140 is made to fix a section of the material strip 10 protruding from the winding needle gap 133 of the first winding member 134, so as to prevent the section of the material strip 10 from slipping relative to the winding needle 132 during rotation of the winding needle 132 of the first winding member 134, and at the same time, to allow the section of the material strip 10 protruding from the winding needle gap 133 of the first winding member 134 to be wound onto the winding needle 132 of the first winding member 134. When the first winding member 134 winds the preset length of the material strip 10 conveyed by the material-placing mechanism 110 onto the first winding member 134 at the winding station 151, the rotating plate 121 is rotated, so as to drive the first winding member 134 to rotate to the material-unloading station 152, and to drive the second winding member 135 to rotate to the winding station 151. When the second winding member 135 is at the winding station 151, the rotation of the rotating plate 121 is stopped, and meanwhile, the winding needle base 131 of the second winding member 135 is made to drive the winding needle 132 to slide and protrude out relative to the rotating plate 121 along the axial direction of the winding needle 132, so as to locate the material strip 10 in the winding needle gap 133 of the second winding member 135. Then, the restraining member 140 is made to fix the material strip 10 protruding from the winding needle gap 133 of the second winding member 135 with a preset force; subsequently, the cutter assembly 160 is adopted to cut off the material strip 10 between the first winding member 134 and the second winding member 135; finally, the winding needle base 131 of the second winding member 135 is made to drive its corresponding winding needle 132 to rotate relative to the rotating plate 121, so as to wind both the preset length of the material strip 10 conveyed by the material-placing mechanism 110 and the material strip 10 protruding from the winding needle gap 133 of the second winding member 135 onto the winding needle 132 of the second winding member 135.

Additionally, similarly, after the winding needle 132 of the second winding member 135 completes the winding and the first winding member 134 finishes unloading, the rotating plate 121 is rotated again to rotate the first winding member 134 to the winding station 151 and to rotate the second winding member 135 to the material-unloading station 152 for a further winding of the first winding member 134, and so on, therefore performing a plurality of windings of the first winding member 134 and the second winding member 135.

It can be seen that when the winding member 130 includes both the first winding member 134 and the second winding member 135, and the winding of the cell can be completed on the first winding member 134, by rotating the first winding member 134 to the material-unloading station 152 and rotating the second winding member 135 to the winding station 151 via the rotating plate 121, it is possible to reduce the winding time for the first winding member 134 and the second winding member 135 and improve the winding efficiency of the cell.

In some possible embodiments, referring to FIGS. 8 and 9, the cutter assembly 160 includes a cutter driving member 161 and a cutter 162 connected to the cutter driving member 161. The cutter driving member 161 is configured to drive the cutter 162 to move towards the material strip 10, so as to cut off the material strip 10 between the first winding member 134 and the second winding member 135.

Thus, by using the cutter driving member 161 to drive the cutter 162 to cut off the material strip 10 between the first winding member 134 and the second winding member 135, compared to manually cutting off the material strip 10 between the first winding member 134 and the second winding member 135, the winding efficiency of the winding device 100 is further improved.

Herein, the cutter driving member 161 can be a pneumatic cylinder or a linear motor, among others.

Alternatively, the material strip 10 can be two layers of diaphragms that are stacked together, or alternatively, the material strip 10 can be two layers of diaphragms with a pole piece sandwiched between them.

During the winding of the cell, when the material strip 10 includes two layers of diaphragms, and the cutter 162 cuts off the material strip 10 between the first winding member 134 and the second winding member 135, the two layers of diaphragms are highly prone to displacement, which can affect the winding performance of the wound cell. Based on this, in some possible embodiments, referring to FIG. 9, the cutter 162 is provided with a heating rod 163 therein, which is configured to heat the cutter 162.

Since the heating rod 163 can heat the cutter 162, when the cutter 162 cuts off the material strip 10, it is possible to bond the two layers of diaphragms together, thereby preventing the displacement of the diaphragms on both sides and thus ensuring the winding performance of the wound cell.

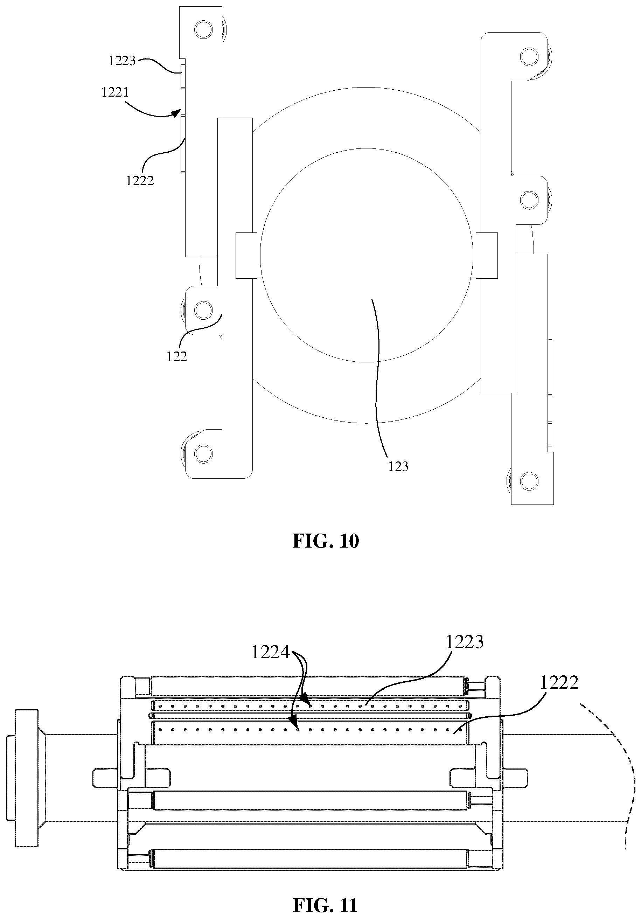

When the cutter 162 cuts off the material strip 10, since the material strip 10 is flexible, to ensure the cutting effect of the cutter 162, in some possible embodiments, referring to FIG. 10, the mounting table 120 also includes a connection shaft 123 and an abutting member 122 provided on the connection shaft 123, the abutting member 122 is configured to provide an abutting force to the material strip 10 when the cutter 162 cuts off the material strip 10 between the first winding member 134 and the second winding member 135, and the rotating plate is fixed to the connection shaft 123.

Since the abutting member 122 is provided on the connection shaft 123 and provides an abutting force to the material strip 10 when the cutter 162 cuts off the material strip 10, the abutting force of the cutter 162 applied to the material strip 10 and the abutting force of the abutting member 122 applied to the material strip 10 are in opposite directions, so as to prevent the material strip 10 from moving in the direction of the abutting force of the cutter 162 during the cutting process of the cutter 162, thereby ensuring the cutting effect of the cutter 162 to the material strip 10.

Furthermore, in some possible embodiments, referring to FIG. 10, the abutting member 122 is provided with an avoidance groove 1221, which is configured to avoid the cutter 162.

Therefore, by providing the avoidance groove 1221, it is possible to avoid the cutter 162 when cutting the material strip 10, so that the cutter 162 can penetrate the material strip 10 and be inserted into the avoidance groove 1221, thereby ensuring the cutting effect of the cutter 162.

In some possible embodiments, referring to FIG. 11, the abutting member 122, on a side facing the material strip 10, is provided with a first adsorption plate 1222 and a second adsorption plate 1223, there is an avoidance gap between the first adsorption plate 1222 and the second adsorption plate 1223, the avoidance gap forms the avoidance groove 1221, and the first adsorption plate 1222 and the second adsorption plate 1223 are configured to adsorb the material strip 10.

Specifically, both the first adsorption plate 1222 and the second adsorption plate 1223 are provided with a plurality of second adsorption holes 1224.

Thus, when the cutter 162 cuts the material strip 10, the first adsorption plate 1222 and the second adsorption plate 1223 are first made to adsorb and fix the material strip 10 onto the abutting member 122, and then, the cutter driving member 161 drives the cutter 162 to move towards the abutting member 122 until the cutter 162 penetrates the material strip 10 and is inserted into the avoidance groove 1221, thereby completing the cutting of the material strip 10 by the cutter 162. It can be seen that by providing the first adsorption plate 1222 and the second adsorption plate 1223, it is possible to ensure the stability of providing the material strip 10 when the cutter 162 cuts the material strip 10, thereby ensuring the cutting effect of the cutter 162 to the material strip 10.

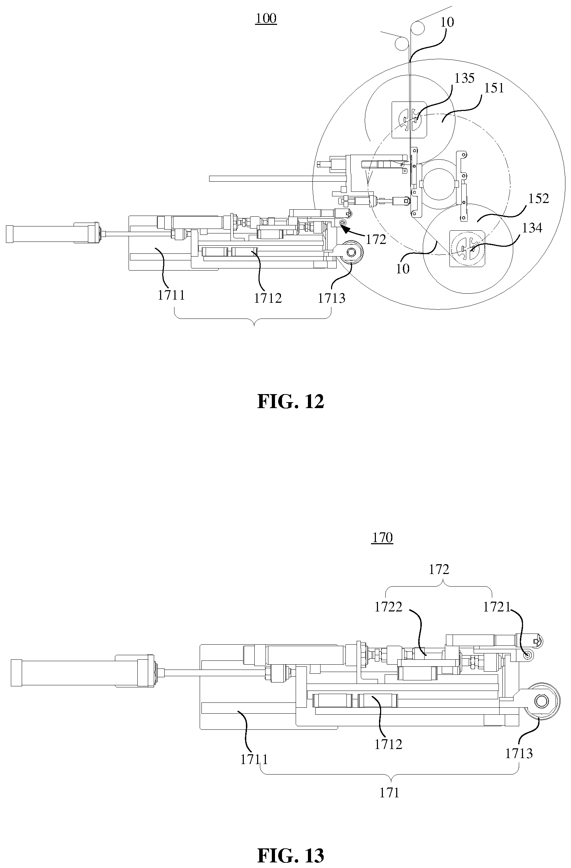

In some possible embodiments, referring to FIGS. 12 and 13, the winding device 100 further includes a finishing assembly 170, the finishing assembly 170 includes a finish compressing member 171 provided adjacent to the material-unloading station 152, and the finish compressing member 171 is configured to press the material strip 10, which is adjacent to the material-unloading station 152 and has been cut off, onto the winding member 130 at the material-unloading station 152.

Herein, the above finish compressing member 171 is configured to press the material strip 10, which is adjacent to the material-unloading station 152 and has been cut off, onto the winding member 130 at the material-unloading station 152. It should be understood that when the first winding member 134 is at the material-unloading station 152, the finish compressing member 171 is configured to press a section of the material strip 10 wound onto the winding needle 132 of the first winding member 134 to the winding needle 132 of the first winding member 134; alternatively, when the second winding member 135 is at the material-unloading station 152, the finish compressing member 171 is configured to press a section of the material strip 10 wound onto the winding needle 132 of the second winding member 135 to the winding needle 132 of the second winding member 135.

Thus, when the cutter 162 cuts off the material strip 10 between the first winding member 134 and the second winding member 135, by providing the finish compressing member 171, it is possible to ensure the winding performance of a section of the material strip 10 wound onto the first winding member 134 or the second winding member 135.

Specifically, the finish compressing member 171 includes a bracket 1711, a pressure driving member 1712 provided on the bracket 1711, and a pressing wheel 1713 connected to the pressure driving member 1712. When the pressure driving member 1712 drives the pressing wheel 1713 to press onto the winding needle 132 at the material-unloading station 152, on one hand, the pressing wheel 1713 can press the material strip 10 to wind it onto the winding needle 132 at the material-unloading station 152, thereby ensuring the winding performance of the material strip 10; on the other hand, since the pressing wheel 1713 rolls against the material strip 10, it is possible to reduce the friction between the material strip 10 and the pressing wheel 1713, further ensuring the winding performance of the material strip 10.

In some possible embodiments, referring to FIGS. 12 and 13, the finishing assembly 170 further includes a finishing adsorption member 172 provided adjacent to the material-unloading station 152, and the finishing adsorption member 172 is configured to adsorb the material strip 10, which is adjacent to the material-unloading station 152 and has been cut off, so as to prevent a free end of the material strip 10 from swinging.

By providing the finishing adsorption member 172, it is possible to adsorb a section of the material strip 10 wound onto the winding needle 132 at the material-unloading station 152, thereby improving the winding performance of the first winding member 134.

Specifically, the finishing adsorption member 172 includes an adsorption driving member 1721 provided on the bracket 1711 and a finishing adsorption plate 1722 connected to the adsorption driving member 1721. When the cutter 162 cuts off the material strip 10 between the first winding member 134 and the second winding member 135, the adsorption driving member 1721 drives the finishing adsorption plate 1722 to move towards the material strip 10, so as to adsorb a section of the material strip 10 wound onto the winding needle 132 of the first winding member 134, thereby preventing the material strip 10 that has been cut off from swinging and thus ensuring the winding performance of the cell.

Finally, it should be noted that the above embodiments are only illustrative of the technical solutions of the present disclosure and are not intended to limit the scope thereof. Although the present disclosure has been described in detail with reference to the foregoing embodiments, a person of ordinary skills in the art will appreciate that various modifications may be made to the technical solutions disclosed in the foregoing embodiments, or that certain technical features may be substituted on an equivalent basis, either partially or entirely. Such modifications or substitutions do not depart from the essential spirit and the scope of the technical solutions of the embodiments of the present disclosure.

## Claims

1. A winding device, **characterized by** comprising:
a material-placing mechanism (110) configured to convey a material strip (10);
a mounting table (120);
a winding member (130) comprising a winding needle base (131) and a plurality of winding needles (132) provided on the winding needle base (131), the winding needle base (131) being rotatably provided on the mounting table (120), with a winding needle gap (133) formed between the plurality of winding needles (132) and configured to allow the material strip (10) to pass through; and
a restraining member (140) provided outside the winding needle gap (133) and configured to fix the material strip (10) protruding from the winding needle gap (133) with a preset force F1, where a winding tension applied to the material strip (10) when the winding needle base (131) drives the winding needle (132) to rotate is F2, and F1 is less than F2, so as to wind both a preset length of the material strip (10) and the material strip (10) protruding from the winding needle gap (133) onto the winding needle (132) when the winding needle base (131) drives the winding needle (132) to rotate.

2. The winding device according to claim 1, **characterized in that** the restraining member (140) is movable towards or away from the winding needle (132) so as to fix the material strip (10) protruding from the winding needle gap (133) with the preset force or release it.

3. The winding device according to claim 1 or 2, **characterized in that** the restraining member (140) comprises a first driving member (1411) and an adsorption member (141) connected to the first driving member (1411), the first driving member (1411) is configured to drive the adsorption member (141) to move towards or away from the winding needle (132), and the adsorption member (141) is configured to adsorb and fix the material strip (10) protruding from the winding needle gap (133).

4. The winding device according to claim 3, **characterized in that** the adsorption member (141) is an adsorption plate, which is provided with a plurality of first adsorption holes (1412) on a side of the adsorption plate facing the material strip (10).

5. The winding device according to claim 1 or 2, **characterized in that** the restraining member (140) comprises a second driving member (1421) and a pressure roller (142) rotatably connected to the second driving member (1421), the second driving member (1421) is configured to drive the pressure roller (142) to move towards or away from the winding needle (132), and the pressure roller (142) is configured to press the material strip (10) protruding from the winding needle gap (133) onto the winding needle (132) so as to fix the material strip (10) by pressing.

6. The winding device according to claim 5, **characterized in that** the restraining member (140) further comprises a mounting base (1422) connected to the second driving member (1421), and an elastic member (1423) provided on the mounting base (1422), with the pressure roller (142) provided on the elastic member (1423).

7. The winding device according to any one of claims 1 to 6, **characterized in that** the mounting table (120) comprises a rotating plate (121), which is rotatable about its central axis;
the winding member (130) comprises a first winding member (134) and a second winding member (135);
the winding device further comprises a cutter assembly (160), which is configured to cut off a material strip (10) between the first winding member (134) and the second winding member (135), and the restraining member (140) is configured to fix the material strip (10) which protrudes from the winding needle gap (133) and has been cut off.

8. The winding device according to claim 7, **characterized in that** the cutter assembly (160) comprises a cutter driving member (161) and a cutter (162) connected to the cutter driving member (161), and the cutter driving member (161) is configured to drive the cutter (162) to move towards the material strip (10) so as to cut off the material strip (10) between the first winding member (134) and the second winding member (135).

9. The winding device according to claim 8, **characterized in that** the cutter (162) is provided with a heating rod (163) therein, which is configured to heat the cutter (162).

10. The winding device according to claim 9, **characterized in that** the material strip (10) comprises two layers of diaphragms, which are bonded together when the cutter (162) cuts the material strip (10) off.

11. The winding device according to any one of claims 8 to 10, **characterized in that** the mounting table (120) further comprises a connection shaft (123) and an abutting member (122) provided on the connection shaft (123), the abutting member (122) is configured to provide an abutting force to the material strip (10) when the cutter (162) cuts off the material strip (10) between the first winding member (134) and the second winding member (135), and the rotating plate (121) is fixed to the connection shaft (123).

12. The winding device according to claim 11, **characterized in that** the abutting member (122) is provided with an avoidance groove (1221), which is configured to avoid the cutter (162).

13. The winding device according to claim 11 or 12, **characterized in that** the abutting member (122), on a side facing the material strip (10), is provided with a first adsorption plate (1222) and a second adsorption plate (1223), there is an avoidance gap between the first adsorption plate (1222) and the second adsorption plate (1223), the avoidance gap forms the avoidance groove (1221), and the first adsorption plate (1222) and the second adsorption plate (1223) are configured to adsorb the material strip (10).

14. The winding device according to any one of claims 1 to 13, **characterized in that** the winding device further comprises a finishing assembly (170), and has a material-unloading station (152);
the finishing assembly (170) comprises a finish compressing member (171) provided adjacent to the material-unloading station (152), and the finish compressing member (171) is configured to press the material strip (10), which is adjacent to the material-unloading station (152) and has been cut off, onto the winding member (130) at the material-unloading station (152).

15. The winding device according to claim 14, **characterized in that** the finishing assembly (170) further comprises a finishing adsorption member (172), and the finishing adsorption member (172) is configured to adsorb the material strip (10), which is adjacent to the material-unloading station (152) and has been cut off, so as to prevent a free end of the material strip (10) from swinging.
